# EUROPEAN PATENT SPECIFICATION

(11) **EP 3 633 162 B1**
(45) Date of publication and mention of the grant of the patent: **01.12.2021**
(21) Application number: 19201553.5
(22) Date of filing: 04.10.2019
(51) Int. Cl.: F02C 7/18, F02C 7/04, F02C 3/14, F02K 3/06

(54) **JET ENGINE HEAT EXCHANGER SYSTEM**
WÄRMETAUSCHERSYSTEM FÜR STRAHLTRIEBWERK
SYSTÈME D'ÉCHANGEUR DE CHALEUR DE TURBORÉACTEUR

(30) Priority: 04.10.2018 US 201816151864
(43) Date of publication of application: 08.04.2020
(73) Proprietor: Raytheon Technologies Corporation, Farmington, CT 06032 (US)
(72) Inventor: MULDOON, Marc J., Marlborough, CT Connecticut 06447 (US); CHAPIN, Melissa B., Ludlow, MA Massachusetts 01056 (US)
(74) Representative: Dehns

(56) References cited:
- EP-A2- 3 015 696
- US-A- 2 940 258
- US-A1- 2013 259 639
- US-B2- 10 024 235

## Description

### BACKGROUND

### 1. Technical Field

This disclosure relates generally to gas turbine engines for vehicles, and more particularly to cooling systems associated with gas turbine engines.

### 2. Background Information

The trend in aircraft gas turbine engine design is towards higher electrical aircraft demands for both aircraft and engine accessory loads as well as propulsion. The optimal method of meeting this increased demand may vary depending on whether the power is used for propulsion or accessory loads as well as the state of the art of electrical power and storage components. Increased power demands require additional generators, motors, or other loads that in turn require additional cooling capacity to address waste heat.

For example, aircraft or other vehicles may have high heat loads due to extensive electronics systems or other auxiliary loads. Additionally, gas turbine engines with smaller cores may have insufficient packaging space for heat exchangers sized to manage increased heat loads. With sufficiently high loads, the lack of space within gas turbine engines for additional cooling capacity may become a limiting condition in aircraft and other vehicles. US2013/259639A1 and EP3015696A2 disclose gas turbine engines of the prior art.

### SUMMARY

The present invention relates to an appartus as laid out in claim 1, whereby a gas turbine engine includes an offset core and a propulsion assembly. The offset core is configured to rotate about a first axis. The propulsion assembly includes a fan section and a low-pressure turbine connected to the offset core. The fan section is in communication with the low-pressure turbine by a shaft configured to rotate about a second axis, different than the first axis. The shaft includes a nosecone inlet duct, an inner channel, and at least one shaft vent. The nosecone inlet duct is disposed within the fan section. The inner channel extends along a length of the shaft between the nosecone inlet duct and at least one air duct circumscribing the shaft. The at least one shaft vent is disposed within the at least one air duct. The at least one air duct is configured to deliver air from the nosecone inlet duct to at least one heat exchanger.

Additionally thereto, in the foregoing aspect, the propulsion assembly further includes a planetary gear system coupling the low-pressure turbine to the shaft.

In the alternative or additionally thereto, in the foregoing aspect, the inner channel extends substantially an entire length of the shaft.

In the alternative or additionally thereto, in the foregoing aspect, the shaft further includes a plurality of shaft seals configured to provide an air seal between the shaft and the at least one air duct. Each shaft seal of the plurality of shaft seals is disposed between the shaft and an inner surface of the at least one air duct in an annular array about a circumference of the shaft.

In the alternative or additionally thereto, in the foregoing aspect, the gas turbine engine further includes a core cowl arranged substantially about the second axis and enveloping at least a portion of the offset core and the propulsion assembly.

In the alternative or additionally thereto, in the foregoing aspect, the at least one air duct is configured to cool the core cowl by delivering air from the nosecone inlet duct to the core cowl.

In the alternative or additionally thereto, in the foregoing aspect, the offset core includes an accessory mount structure configured to hold the at least one heat exchanger.

In the alternative or additionally thereto, in the foregoing aspect, the core cowl and the accessory mount structure are configured to share at least a portion of a weight of the at least one heat exchanger.

In the alternative or additionally thereto, in the foregoing aspect, the first axis is angularly skewed with respect to the second axis.

In the alternative or additionally thereto, in the foregoing aspect, the first axis is substantially parallel to the second axis.

In the alternative or additionally thereto, in the foregoing aspect, the at least one heat exchanger is configured to extend in a radial direction substantially a distance between the propulsion assembly and the core cowl.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 is a side, cutaway illustration of an offset-core gas turbine engine.
FIG. 2 is a side, cutaway illustration of an offset-core gas turbine engine with an exemplary heat exchanger and air intake configuration according to aspects of the present disclosure
FIG. 3 is a front illustration of the offset-core gas turbine engine of FIG. 2.
FIG. 4 is a side, cutaway illustration of a partial shaft of the gas turbine engine of FIG. 2.

### DETAILED DESCRIPTION

It is noted that various connections are set forth between elements in the following description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

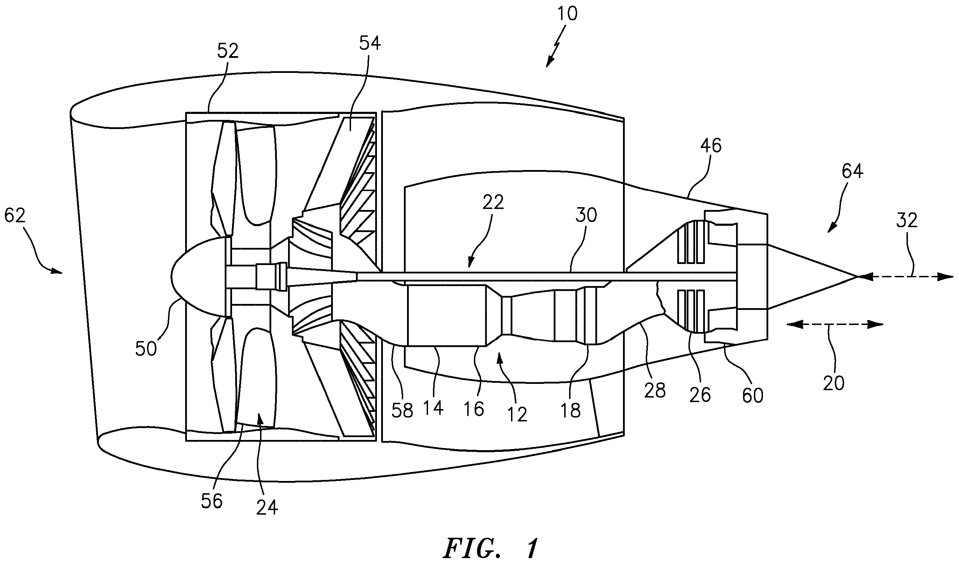

FIG. 1 shows a gas turbine engine 10 including a propulsion assembly 22 and an offset core 12. The propulsion assembly 22 includes a fan section 24, having a fan 56, a shaft 30, and a low-pressure turbine 26, wherein the low-pressure turbine 26 rotates the shaft 30 which, in turn, rotates the fan 56. The offset core 12 is positioned to receive air from the fan 56 via a compressor transition duct 58 (e.g., an inlet duct). The offset core 12 includes a compressor section 14, a combustor section 16, and a turbine section 18. While the embodiments disclosed herein relate to aircraft gas turbine engines, the disclosure is not limited to aircraft gas turbine engines and may be used in gas turbine engines of any suitable vehicle.

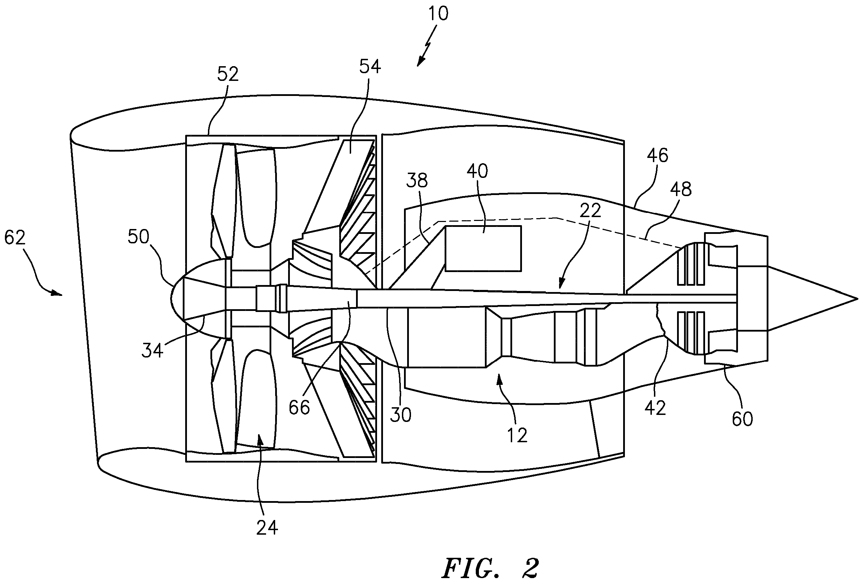

The compressor section 14 is driven by the turbine section 18. The combustor section 16 is positioned intermediate the compressor section 14 and the turbine section 18. A turbine transition duct 28 (e.g., an exhaust duct) extends downstream from the turbine section 18 into a low-pressure turbine 26 and further downstream into an exhaust section 60. The products of combustion, downstream of the turbine section 18, pass across the low-pressure turbine 26 which is driven to rotate the shaft 30, thereby rotating the fan 56. In some embodiments, the low-pressure turbine 26 may drive the fan 56 through a speed reducing geared architecture, for example, a planetary gear system 42, which couples the low-pressure turbine 26 to the shaft 30 (see FIG. 2).

The axis of the offset core 12 is offset with respect to the axis of the propulsion assembly 22. For example, at least one of the compressor section 14 and the turbine section 18 may be configured to rotate about a first axis 20 while the shaft 30 of the propulsion assembly 22 is configured to rotate about a second axis 32, different than the first axis 20. In some embodiments, the first axis 20 and the second axis 32 may be substantially parallel. In some other embodiments, the first axis 20 may be angularly skewed relative to the second axis 32.

The gas turbine engine 10 further includes a core cowl 46 arranged substantially around the longitudinal axis of the propulsion assembly 22, for example, the second axis 32. The core cowl 46 is generally disposed within the gas turbine engine 10 between the fan section 24 and the aft end 64 of the gas turbine engine 10. The core cowl 46 may be positioned so as to envelope at least a portion of the offset core 12 and the propulsion assembly 22.

The compressor transition duct 58 is disposed just aft of the fan 56 and is configured to convey air from the fan 56 to the offset core 12. In some embodiments, the fan section 24 includes a plurality of fan exit guide vanes 54 positioned at the outlet of a fan case 52, for example, to direct air flow into the compressor section 14. The fan section 24 may further include a nosecone 50 disposed on the fan 56 at a forward end 62 of the gas turbine engine 10 and arranged substantially around the longitudinal axis of the propulsion assembly 22, for example, the second axis 32.

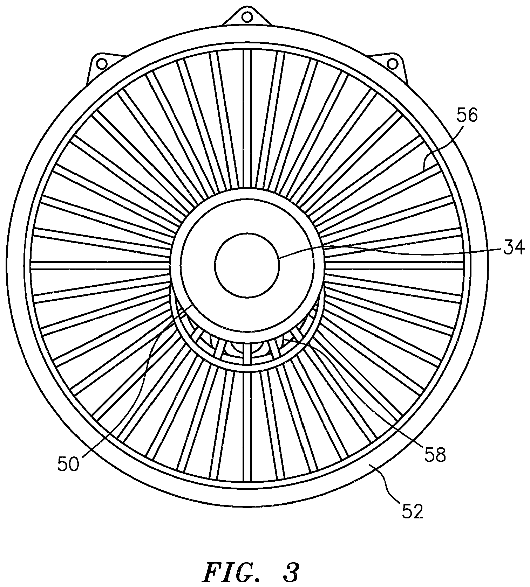

FIGS. 2-4 illustrate the gas turbine engine 10 with an exemplary configuration of at least one heat exchanger 40. The at least one heat exchanger 40 is oriented, within the core cowl 46, between the propulsion assembly 22 and the core cowl 46. For example, because of the offset orientation of the offset core 12, the at least one heat exchanger 40 may be oriented so as to extend in a radial direction (e.g., substantially the full radial distance) between the propulsion assembly 22 and the core cowl 46 (i.e., compared to a typical concentric shaft engine). The radial orientation of the at least one heat exchanger 40 thereby facilitates greater frontal surface area (i.e., intake area) of the at least one heat exchanger 40 with respect to total heat exchanger volume as compared to the same relationship found in heat exchanger applications on a typical concentric shaft engine.

As one of ordinary skill in the art will appreciate, the at least one heat exchanger 40 may be any type, configuration, size, or shape of heat exchanger, for example, the at least one heat exchanger 40 may use forced air, liquid, etc. as a coolant or any other appropriate cooling medium. The at least one heat exchanger 40 may include heat exchangers having different types/configurations with respect to one another. Additionally, the at least one heat exchanger 40 may be used to provide cooling for electronics and/or other loads.

The offset core 12 may further include an accessory mount structure 48 configured to hold the at least one heat exchanger 40. The at least one heat exchanger 40, as well as other external components, may be mounted on the accessory mount structure 48, for example, within the core cowl 46. In some embodiments, the accessory mount structure 48 and the core cowl 46 may share the load (i.e., the weight) of the at least one heat exchanger 40 and other external components, thereby reducing the required size, and accordingly the weight, of the accessory mount structure 48. For example, the accessory mount structure 48 may be mounted to the offset core 12 and extend outward from the offset core 12 into the core cowl 46 (e.g., an exoskeleton). The accessory mount structure 48 may include one or more mount points configured to support the load of larger heat exchangers.

As can be seen in FIG. 2, the shaft 30 includes a nosecone inlet duct 34 disposed within the fan section 24, an inner channel 66, and at least one shaft vent 36 disposed within at least one air duct 38. The inner channel 66 extends along a length of the shaft 30 between the nosecone inlet duct 34 and the at least one air duct 38. The at least one air duct 38 is configured to deliver air from the nosecone inlet duct 34 to the at least one heat exchanger 40 . In some embodiments, the inner channel 66 may extend up to substantially the entire length of the shaft 30. Air passing through the inner channel 66 from the nosecone inlet duct 34 enters the at least one air duct 38 through at least one shaft vent 36 disposed within the at least one air duct 38. Air pulled in through the nosecone inlet duct 34 may be substantially cooler than air which has passed through the fan section 24 of the gas turbine engine 10, thereby providing a reduced heat exchanger source temperature for the at least one heat exchanger 40.

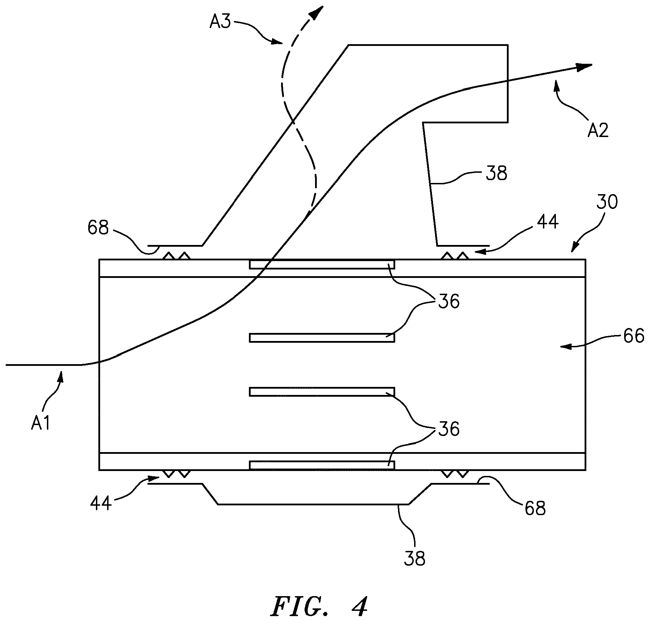

FIG. 4 illustrates an exemplary air duct of the at least one air duct 38. The at least one air duct 38 circumscribes the shaft 30. The shaft 30 may include a plurality of shaft seals 44 configured to provide an air seal between the shaft 30 and the at least one air duct 38. For example, each shaft seal of the plurality of shaft seals 44 may be disposed in an annular array about the outer circumference of the shaft 30 between the shaft 30 and an inner surface 68 of the at least one air duct 38. In some embodiments, the at least one air duct 38 may be disposed about the shaft along a length of the shaft, for example, the at least one air duct 38 may include a forward air duct and an aft air duct configured to direct air to the at least one heat exchanger 40. In other embodiments, the at least one air duct 38 may include air duct segments extending partially around the circumferences of the shaft 30 (e.g., about the second axis 32) in an annular arrangement extending about at least a portion of the shaft 30.

The at least one shaft vent 36 may be disposed on the shaft 30 within the at least one air duct 38, for example, between the plurality of shaft seals 44 of the shaft 30 and a respective air duct of the at least one air duct 38. As one of ordinary skill in the art will appreciate, the at least one shaft vent 36 may be of any size, shape, or orientation (i.e., longitudinally or circumferentially) within the at least one air duct 38 so as to direct air from the inner channel 66 of the shaft 30 into the at least one air duct 38. In some embodiments, the at least one shaft vent 36 may be configured to facilitate impeller action of the shaft 30 within the at least one air duct 38 (i.e., pumping of the air through the at least one air duct 38). In some embodiments, the at least one shaft vent 36 may be configured to facilitate pumping of the air with minimal temperature increase (e.g., "aero-shaping" of the at least one shaft vent 36).

As can be seen in FIG. 4, air A1 transiting the shaft 30 via the inner channel 66 is directed into the at least one air duct 38 through the at least one shaft vent 36. The at least one air duct 38 direct air A2 into the at least one heat exchanger 40. In some embodiments, each air duct of the at least one air duct 38 may direct air A2 into a single heat exchanger of the at least one heat exchanger 40. In other embodiments, each air duct of the at least one air duct 38 may direct air A2 into more than one heat exchanger of the at least one heat exchanger 40. Additionally, in some embodiments, the at least one air duct 38 may be configured to cool the core cowl 46 by delivering air A3 from the nosecone inlet duct 34 to the core cowl 46

Referring to FIG. 2, in some embodiments, the propulsion assembly 22 may include a planetary gear system 42 configured to impart a speed ratio between the fan 56 and the low-pressure turbine 26. The planetary gear system 42 may be disposed within the propulsion assembly or, alternatively outside the propulsion assembly 22, for example, within the turbine transition duct 28.

While various embodiments of the present disclosure have been disclosed, it will be apparent to those of ordinary skill in the art that many more embodiments and implementations are possible within the scope of the present disclosure. Accordingly, the present disclosure is not to be restricted except in light of the attached claims.

## Claims

1. A gas turbine engine (10) **characterised by**:
an offset core (12) configured to rotate about a first axis (20); and
a propulsion assembly (22) comprising a fan section (24) and a low-pressure turbine (26) connected to the offset core (12), the fan section (24) in communication with the low-pressure turbine (26) by a shaft (30) configured to rotate about a second axis (32), different than the first axis (20), the shaft (30) comprising:
a nosecone inlet duct (34) disposed within the fan section (24);
an inner channel (66) extending along a length of the shaft (30) between the nosecone inlet duct (34) and at least one air duct (38) circumscribing the shaft (30);
at least one shaft vent (36) disposed within the at least one air duct (38);
and at least one heat exchanger (40);
wherein the at least one air duct (38) is configured to deliver air from the nosecone inlet duct (34) to the at least one heat exchanger (40).

2. The gas turbine engine of claim 1, wherein the propulsion assembly (22) further comprises a planetary gear system (42) coupling the low-pressure turbine (26) to the shaft (30).

3. The gas turbine engine of claim 1 or 2, wherein the inner channel (66) extends substantially an entire length of the shaft (30).

4. The gas turbine engine of claim 1, 2 or 3, wherein the shaft (30) further comprises a plurality of shaft seals (44) configured to provide an air seal between the shaft (30) and the at least one air duct (38), each shaft seal (44) of the plurality of shaft seals (44) disposed between the shaft (30) and an inner surface (68) of the at least one air duct (38) in an annular array about a circumference of the shaft (30).

5. The gas turbine engine of any preceding claim, wherein the offset core (12) comprises at least a compressor section (14), a combustion section (16), and a turbine section (18), at least one of the compressor section (14) and the turbine section (18) configured to rotate about the first axis.

6. The gas turbine engine of any preceding claim, further comprising a core cowl (36) arranged substantially about the second axis (32) and enveloping at least a portion of the offset core (12) and the propulsion assembly (22).

7. The gas turbine engine of claim 6, wherein the at least one air duct (38) is configured to cool the core cowl (36) by delivering air from the nosecone inlet duct (34) to the core cowl (36).

8. The gas turbine engine of claim 6 or 7, wherein the offset core (12) further comprises an accessory mount structure (48) configured to hold the at least one heat exchanger (40).

9. The gas turbine engine of claim 8, wherein the core cowl (36) and the accessory mount structure (48) are configured to share at least a portion of a weight of the at least one heat exchanger (40).

10. The gas turbine engine of any of claims 6 to 9, wherein the at least one heat exchanger (40) is configured to extend in a radial direction substantially a distance between the propulsion assembly (22) and the core cowl (46).

11. The gas turbine engine of any preceding claim, wherein the first axis (20) is angularly skewed with respect to the second axis (32).

12. The gas turbine engine of any of claims 1 to 10, wherein the first axis (20) is substantially parallel to the second axis (32).

## Patentansprüche

1. Gasturbinentriebwerk (10), **gekennzeichnet durch**:
einen versetzten Kern (12), der dazu konfiguriert ist, sich um eine erste Achse (20) zu drehen; und
eine Antriebsbaugruppe (22), umfassend einen Fanabschnitt (24) und eine Niederdruckturbine (26), die mit dem versetzten Kern (12) verbunden sind, wobei der Fanabschnitt (24) in Kommunikation mit der Niederdruckturbine (26) durch eine Welle (30) steht, die dazu konfiguriert ist, sich um eine zweite Achse (32) zu drehen, die sich von der ersten Achse (20) unterscheidet, wobei die Welle (30) Folgendes umfasst:
einen Bugkonuseinlasskanal (34), der innerhalb des Fanabschnitts (24) angeordnet ist;
einen inneren Durchgang (66), der sich entlang einer Länge der Welle (30) zwischen dem Bugkonuseinlasskanal (34) und mindestens einem Luftkanal (38), der die Welle (30) umschreibt, erstreckt;
mindestens eine Wellenentlüftung (36), die innerhalb des mindestens einen Luftkanals (38) angeordnet ist;
und mindestens einen Wärmetauscher (40);
wobei der mindestens eine Luftkanal (38) dazu konfiguriert ist, Luft aus dem Bugkonuseinlasskanal (34) an den mindestens einen Wärmetauscher (40) abzugeben.

2. Gasturbinentriebwerk nach Anspruch 1, wobei die Antriebsbaugruppe (22) ferner ein Planetenradsystem (42) umfasst, das die Niederdruckturbine (26) an die Welle (30) koppelt.

3. Gasturbinentriebwerk nach Anspruch 1 oder 2, wobei sich der innere Durchgang (66) im Wesentlichen eine gesamte Länge der Welle (30) erstreckt.

4. Gasturbinentriebwerk nach Anspruch 1, 2 oder 3, wobei die Welle (30) ferner eine Vielzahl von Wellendichtungen (44) umfasst, die dazu konfiguriert ist, eine Luftdichtung zwischen der Welle (30) und dem mindestens einen Luftkanal (38) bereitzustellen, wobei jede Wellendichtung (44) der Vielzahl von Wellendichtungen (44) zwischen der Welle (30) und einer inneren Fläche (68) des mindestens einen Luftkanals (38) in einem ringförmigen Array um einen Umfang der Welle (30) angeordnet ist.

5. Gasturbinentriebwerk nach einem der vorhergehenden Ansprüche, wobei der versetzte Kern (12) mindestens einen Verdichterabschnitt (14), einen Verbrennungsabschnitt (16) und einen Turbinenabschnitt (18) umfasst, wobei mindestens einer des Verdichterabschnitts (14) und des Turbinenabschnitts (18) dazu konfiguriert ist, sich um die erste Achse zu drehen.

6. Gasturbinentriebwerk nach einem der vorhergehenden Ansprüche, ferner umfassend eine Kernverkleidung (36), die im Wesentlichen um die zweite Achse (32) angeordnet ist und mindestens einen Teil des versetzten Kerns (12) und der Antriebsbaugruppe (22) einhüllt.

7. Gasturbinentriebwerk nach Anspruch 6, wobei der mindestens eine Luftkanal (38) dazu konfiguriert ist, die Kernverkleidung (36) zu kühlen, indem er Luft aus dem Bugkonuseinlasskanal (34) an die Kernverkleidung (36) abgibt.

8. Gasturbinentriebwerk nach Anspruch 6 oder 7, wobei der versetzte Kern (12) ferner eine Nebenverbrauchermontagestruktur (48) umfasst, die dazu konfiguriert ist, den mindestens einen Wärmetauscher (40) zu halten.

9. Gasturbinentriebwerk nach Anspruch 8, wobei die Kernverkleidung (36) und die Nebenverbrauchermontagestruktur (48) dazu konfiguriert sind, sich mindestens einen Teil eines Gewichts des mindestens einen Wärmetauschers (40) zu teilen.

10. Gasturbinentriebwerk nach einem der Ansprüche 6 bis 9, wobei der mindestens eine Wärmetauscher (40) dazu konfiguriert ist, sich in einer radialen Richtung im Wesentlichen eine Strecke zwischen der Antriebsbaugruppe (22) und der Kernverkleidung (46) zu erstrecken.

11. Gasturbinentriebwerk nach einem der vorhergehenden Ansprüche, wobei die erste Achse (20) winkelig schräg in Bezug auf die zweite Achse (32) ist.

12. Gasturbinentriebwerk nach einem der Ansprüche 1 bis 10, wobei die erste Achse (20) im Wesentlichen parallel zu der zweiten Achse (32) ist.

## Revendications

1. Moteur à turbine à gaz (10) **caractérisé par** :
un noyau décalé (12) configuré pour tourner autour d'un premier axe (20) ; et
un ensemble de propulsion (22) comprenant une section de soufflante (24) et une turbine basse pression (26) reliée au noyau décalé (12), la section de soufflante (24) étant en communication avec la turbine basse pression (26) par un arbre (30) configuré pour tourner autour d'un second axe (32), différent du premier axe (20), l'arbre (30) comprenant :
un conduit d'admission de cône avant (34) disposé à l'intérieur de la section de soufflante (24) ;
un canal interne (66) s'étendant le long d'une longueur de l'arbre (30) entre le conduit d'admission de cône avant (34) et au moins un conduit d'air (38) circonscrivant l'arbre (30) ;
au moins un évent d'arbre (36) disposé à l'intérieur de l'au moins un conduit d'air (38) ;
et au moins un échangeur de chaleur (40) ;
dans lequel l'au moins un conduit d'air (38) est configuré pour fournir de l'air du conduit d'admission de cône avant (34) à l'au moins un échangeur de chaleur (40).

2. Moteur à turbine à gaz selon la revendication 1, dans lequel l'ensemble de propulsion (22) comprend en outre un système d'engrenage planétaire (42) couplant la turbine basse pression (26) à l'arbre (30).

3. Moteur à turbine à gaz selon la revendication 1 ou 2, dans lequel le canal interne (66) s'étend sensiblement sur toute la longueur de l'arbre (30).

4. Moteur à turbine à gaz selon la revendication 1, 2 ou 3, dans lequel l'arbre (30) comprend en outre une pluralité de joints d'arbre (44) configurés pour fournir un joint d'air entre l'arbre (30) et l'au moins un conduit d'air (38), chaque joint d'arbre (44) de la pluralité de joints d'arbre (44) étant disposé entre l'arbre (30) et une surface interne (68) de l'au moins un conduit d'air (38) dans un réseau annulaire autour d'une circonférence de l'arbre (30).

5. Moteur à turbine à gaz selon une quelconque revendication précédente, dans lequel le noyau décalé (12) comprend au moins une section de compresseur (14), une section de combustion (16) et une section de turbine (18), au moins l'une de la section de compresseur (14) et de la section de turbine (18) étant configurée pour tourner autour du premier axe.

6. Moteur à turbine à gaz selon une quelconque revendication précédente, comprenant en outre un capot central (36) agencé sensiblement autour du second axe (32) et enveloppant au moins une partie du noyau décalé (12) et de l'ensemble de propulsion (22) .

7. Moteur à turbine à gaz selon la revendication 6, dans lequel l'au moins un conduit d'air (38) est configuré pour refroidir le capot central (36) en délivrant de l'air du conduit d'admission de cône avant (34) au capot central (36).

8. Moteur à turbine à gaz selon la revendication 6 ou 7, dans lequel le noyau décalé (12) comprend en outre une structure de montage d'accessoires (48) configurée pour contenir l'au moins un échangeur de chaleur (40).

9. Moteur à turbine à gaz selon la revendication 8, dans lequel le capot central (36) et la structure de montage d'accessoires (48) sont configurés pour partager au moins une partie d'un poids de l'au moins un échangeur de chaleur (40).

10. Moteur à turbine à gaz selon l'une quelconque des revendications 6 à 9, dans lequel l'au moins un échangeur de chaleur (40) est configuré pour s'étendre dans une direction radiale sensiblement sur une distance entre l'ensemble de propulsion (22) et le capot central (46).

11. Moteur à turbine à gaz selon une quelconque revendication précédente, dans lequel le premier axe (20) est incliné angulairement par rapport au second axe (32).

12. Moteur à turbine à gaz selon l'une quelconque des revendications 1 à 10, dans lequel le premier axe (20) est sensiblement parallèle au second axe (32).
